(19) Europäisches Patentamt / European Patent Office / Office européen des brevets

(11) **EP 4 501 454 A1**

(12) **EUROPEAN PATENT APPLICATION**
published in accordance with Art. 153(4) EPC

(43) Date of publication:
05.02.2025 Bulletin 2025/06

(21) Application number: 23780456.2

(22) Date of filing: 28.03.2023

(51) International Patent Classification (IPC):
*B01J 37/08* (2006.01)    *B01J 27/232* (2006.01)
*B01J 35/02* (2006.01)    *B01J 37/04* (2006.01)
*B01J 37/16* (2006.01)    *B22F 9/20* (2006.01)

(52) Cooperative Patent Classification (CPC):
**B01J 27/232; B01J 37/04; B01J 37/08;**
**B01J 37/16; B22F 9/20;** B01J 2235/00;
B01J 2235/05; B01J 2235/15; B01J 2235/30

(86) International application number:
**PCT/JP2023/012385**

(87) International publication number:
**WO 2023/190447 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.03.2022  JP 2022054850

(71) Applicant: Tohoku University
Sendai-shi, Miyagi 980-8577 (JP)

(72) Inventors:
• KOSEKI, Yoshitaka
  Sendai-shi, Miyagi 980-8577 (JP)
• SUZUKI, Ryuju
  Sendai-shi, Miyagi 980-8577 (JP)
• KASAI, Hitoshi
  Sendai-shi, Miyagi 980-8577 (JP)
• KANO, Junya
  Sendai-shi, Miyagi 980-8577 (JP)

(74) Representative: Plasseraud IP
104 Rue de Richelieu
CS92104
75080 Paris Cedex 02 (FR)

(54) **TRANSITION METAL NANOPARTICLE CARRIER AND METHOD FOR PRODUCING TRANSITION METAL NANOPARTICLE CARRIER**

(57) Provided is a method for producing a transition metal nanoparticle support, the method including the steps of: (I) obtaining a mixture by mixing a polymeric organic compound, an oxide of at least one transition metal or a hydroxide of at least one transition metal, and an oxide or hydroxide of at least one element selected from alkali metals, alkaline earth metals, aluminum, and lanthanoids; (II) obtaining a solid residue by heating the mixture; and (III) obtaining, from the solid residue, a support in which nanoparticles of the transition metal are supported.

FIG. 1

EP 4 501 454 A1

**Description**

Technical Field

The present invention relates to a method for producing a transition metal nanoparticle support, and also to a transition metal nanoparticle support. The present application claims priority from the Japanese Patent Application No. 2022-054850 filed in Japan on March 30, 2022, the contents of which are incorporated herein by reference.

Background Art

Transition metals such as nickel and copper can be applied to various fields as a catalyst for fuel cells, a catalyst for hydrogenation reactions, or a catalyst for various chemical reactions. From the viewpoint of increasing catalytic activity, studies have been conducted to make the transition metal particles nano-sized.

For example, Patent Document 1 proposes a method for producing nickel nanoparticles, the method including the steps of: mixing a nickel precursor, an organic amine, and a reducing agent to prepare a mixture; and mixing an organic solvent in the mixture and heating the mixture. According to the production method described in Patent Document 1, it is easy to control the size and shape of nickel nanoparticles, and nickel nanoparticles can be obtained with a high yield by a simpler process.

Citation List

Patent Document

Patent Document 1: JP 2010-037647 A

Summary of Invention

Technical Problem

However, in the production of nickel nanoparticles from a liquid phase as in the production method described in Patent Document 1, a waste liquid is produced, and the treatment of the waste liquid is required. In addition, it is necessary to subject the surface of the produced nickel nanoparticles to treatment such as oxidation prevention, and thus an extra step is added to the production of the nickel nanoparticles.

Moreover, no example has been reported about a study of a method for producing, in the production of nickel nanoparticles, a nickel nanoparticle support in which nickel nanoparticles are supported.

Accordingly, an object of the present invention is to provide nanoparticles of a transition metal such as nickel or copper, a support of the nanoparticles, and a method for easily producing the nanoparticles and the support in a solid phase.

Solution to Problem

In order to solve the above-mentioned issue, the present invention has the following aspects.

[1] A method for producing a transition metal nanoparticle support, the method including the steps of:

(I) obtaining a mixture by mixing a polymeric organic compound, an oxide of at least one transition metal or a hydroxide of at least one transition metal, and an oxide or hydroxide of at least one element selected from alkali metals, alkaline earth metals, aluminum, and lanthanoids;
(II) obtaining a solid residue by heating the mixture; and
(III) obtaining, from the solid residue, a support in which nanoparticles of the at least one transition metal are supported.

[2] The method for producing a transition metal nanoparticle support according to [1], wherein the element is at least one selected from alkali metals and alkaline earth metals.

[3] The method for producing a transition metal nanoparticle support according to [1] or [2], wherein the polymeric organic compound is at least one selected from polyolefins, polyvinyl alcohol, polyethylene glycol, and celluloses.

[4] The method for producing a transition metal nanoparticle support according to any one of [1] to [3], wherein the step (I) includes a grinding operation of grinding the mixture.

[5] The method for producing a transition metal nanoparticle support according to any one of [1] to [4], wherein a heating temperature in the step (II) is from 500 to 650°C.

[6] The method for producing a transition metal nanoparticle support according to any one of [1] to [5], wherein in the step (II), water is added dropwise to the mixture.

[7] The method for producing a transition metal nanoparticle support according to any one of [1] to [6], wherein the transition metal is copper or nickel.

[8] A nickel nanoparticle support containing:

a carrier containing at least one element selected from alkali metals, alkaline earth metals, aluminum, and lanthanoids; and
transition metal nanoparticles supported on the carrier.

Advantageous Effects of Invention

According to the method for producing a transition metal nanoparticle support of the present invention, transition metal nanoparticles can be produced more easily.

Brief Description of Drawings

FIG. 1 is a schematic view illustrating an example of an apparatus for producing a transition metal nanoparticle support of the present invention.

FIG. 2 is a table indicating results of a steam reforming reaction in which nickel nanoparticle supports according to an embodiment of the present invention were used.

FIG. 3 is an example of transmission electron microscope (TEM) photographs of a nickel nanoparticle support according to an embodiment of the present invention.

FIG. 4 is photographs in which a part of FIG. 3 is enlarged.

FIG. 5 is an example of transmission electron microscope (TEM) photographs of a nickel particle support according to a comparative example.

FIG. 6 is an X-ray diffraction spectrum of a ground product before heating used in the production of Example 3.

FIG. 7 is an X-ray diffraction spectrum of a nickel nanoparticle support produced in Example 3.

FIG. 8 illustrates measurement results of the nickel nanoparticle support produced in Example 3 by an electron probe microanalyzer.

FIG. 9 illustrates measurement results of a nickel nanoparticle support produced in Example 4 by an electron probe microanalyzer.

FIG. 10 is an X-ray diffraction spectrum of a ground product before heating used in the production of Example 5.

FIG. 11 illustrates measurement results of a copper nanoparticle support produced in Example 5 by an electron probe microanalyzer.

FIG. 12 illustrates measurement results of the copper nanoparticle support produced in Example 5 by an electron probe microanalyzer.

FIG. 13 illustrates measurement results of a copper nanoparticle support produced in Example 6 by an electron probe microanalyzer.

Description of Embodiments

[Transition Metal Nanoparticle Support]

A transition metal nanoparticle support according to a first aspect of the present invention contains a carrier containing at least one element selected from alkali metals, alkaline earth metals, aluminum, and lanthanoids, and nanoparticles of at least one transition metal that are supported on the carrier. At least a part of the supported transition metal is preferably an unoxidized pure metal. In other words, a part of the supported transition metal may be oxidized by contact with air.

Here, the word "transition metal nanoparticles" refers to particles formed of a transition metal and having a particle size on the order of nanometers. The particle size of the transition metal nanoparticles is determined by observation using a transmission electron microscope (TEM).

The type of the transition metal forming the transition metal nanoparticles is not particularly limited, and examples thereof include copper (Cu), nickel (Ni), cobalt (Co), iron (Fe), manganese (Mn), chromium (Cr), vanadium (V), titanium (Ti), and scandium (Sc). Among them, copper and nickel useful as catalysts for various chemical reactions are preferable.

In the following, nanoparticles formed of copper may be referred to as copper nanoparticles, and nanoparticles formed of nickel may be referred to as nickel nanoparticles.

In the following, nanoparticles of transition metals, such as nickel nanoparticles and copper nanoparticles, are collectively referred to as transition metal nanoparticles. Hereinafter, a preferred embodiment of the transition metal nanoparticles is described.

The particle size of the transition metal nanoparticles is, for example, preferably from 0.1 to 100 nm, more preferably from 0.5 to 50 nm, and still more preferably from 1 to 30 nm. When the particle size of the transition metal nanoparticles is equal to or greater than the above-described lower limit, the transition metal nanoparticle support has higher catalytic activity when being used as a catalyst. When the particle size of the transition metal nanoparticles is equal to or less than the above-described upper limit, the dispersibility of the nickel nanoparticles can be further increased, and as a result, the transition metal nanoparticle support has higher catalytic activity when being used as a catalyst.

Here, the particle size of the transition metal nanoparticles can be determined by observation using a TEM, and the longest length of the transition metal nanoparticles on a TEM image is defined as the particle size of the transition metal nanoparticles.

The shape of the transition metal nanoparticle support is not particularly limited, and is preferably a particle shape from the viewpoint of increasing the surface area as a catalyst. A plurality of transition metal nanoparticles is exposed at least partially, preferably entirely on the surface of the carrier.

The particle size of the transition metal nanoparticle support is, for example, preferably from 0.5 to 100 $\mu$m, more preferably from 1 to 50 $\mu$m, and still more preferably from 3 to 30 $\mu$m. When the particle size of the transition metal nanoparticle support is equal to or greater than the above-described lower limit, a larger amount of transition metal nanoparticles can be supported. When the particle size of the transition metal nanoparticle support is equal to or less than the above-described upper limit, the strength of the transition metal nanoparticle support can be further increased.

Here, the particle size of the transition metal nanoparticle support can be determined by observation using a TEM, and the longest length of the transition metal nanoparticle support on a TEM image is defined as the particle size of the transition metal nanoparticle support.

The shape and particle size of the transition metal nanoparticle support are largely determined by the shape and particle size of the carrier.

Examples of the carrier of the transition metal nanoparticle support include compounds containing at least one element selected from alkali metals, alkaline earth metals, aluminum, and lanthanoids.

Examples of the alkali metals include lithium (Li), sodium (Na), potassium (K), rubidium (Rb), cesium (Cs), and francium (Fr).

Examples of the alkaline earth metals include beryllium (Be), magnesium (Mg), calcium (Ca), strontium (Sr), barium (Ba), and radium (Ra).

Examples of the lanthanoids include lanthanum (La), cerium (Ce), praseodymium (Pr), neodymium (Nd), europium (Eu), ytterbium (Yb), and lutetium (Lu).

Examples of the compound that constitutes the carrier of the nickel nanoparticle support include carbonates, phosphates, hydrochlorides, and sulfates of the above-mentioned elements. Among these compounds, carbonates and phosphates are preferable, and carbonates are more preferable, because the transition metal nanoparticles are easily supported on the carrier.

Among the above-mentioned elements, alkali metals and alkaline earth metals are preferable, alkaline earth metals are more preferable, magnesium and calcium are still more preferable, and calcium is particularly preferable in terms of availability.

As for the carrier of the transition metal nanoparticle support, one type may be used alone, or two or more types may be used in combination.

[Method for Producing Transition Metal Nanoparticle Support]

A method for producing a transition metal nanoparticle support according to a second aspect of the present invention includes the steps of: (I) obtaining a mixture by mixing a polymeric organic compound, an oxide of at least one transition metal or a hydroxide of at least one transition metal (hereinafter, the oxide and the hydroxide may be collectively referred to as transition metal compounds), and an oxide or hydroxide of at least one element selected from alkali metals, alkaline earth metals, aluminum, and lanthanoids; (II) obtaining a solid residue by heating the mixture; and (III) obtaining, from the solid residue, a support in which nanoparticles of the at least one transition metal are supported.

The transition metal nanoparticle support of the first aspect can be produced by the production method of the present aspect.

Hereinafter, an embodiment of the method for producing a transition metal nanoparticle support of the present invention is described in detail with reference to the drawings. Steps from (I) to (III) of the present aspect are not limited to the examples in the following embodiment, and various modifications can be made within the scope of the gist of the present invention. The phrase "step of obtaining..." in the present aspect may be rephrased as "obtaining...".

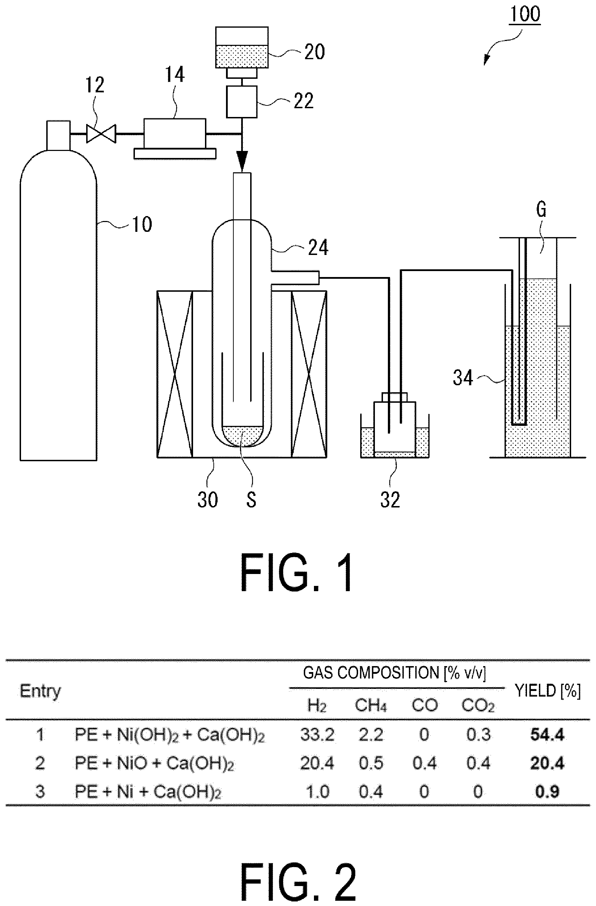

FIG. 1 illustrates an example of an apparatus for producing a transition metal nanoparticle support of the present invention.

As illustrated in FIG. 1, an apparatus 100 for producing a transition metal nanoparticle support of the present embodiment includes a gas supply unit 10, a water supply unit 20, a reactor 24, a heating furnace 30, a cooling unit 32, and a gas collection unit 34. The gas supply unit 10 and the reactor 24 are connected to each other by a pipe, and the pipe is provided with an on-off valve 12 and a flowmeter 14. The water supply unit 20 and the reactor 24 are connected to each other by a pipe, and the pipe is provided with a water amount adjusting device 22. The reactor 24 is provided so as to be heated by the heating furnace 30. The reactor 24 and the cooling unit 32 are connected to each other by a pipe. The cooling unit 32 and the gas collection unit 34 are connected to each other by a pipe.

Examples of the gas supply unit 10 include a gas cylinder and a gas tank.

Examples of the on-off valve 12 include an open/close valve and a flow rate regulating valve.

The flowmeter 14 is not particularly limited as long as it can measure the flow rate of a gas, and a known flowmeter can be used.

Examples of the water supply unit 20 include a water tank and a water pipe.

The water amount adjusting device 22 is not particularly limited as long as it can adjust the supply amount of water, and a known water amount adjusting device can be used.

Examples of the reactor 24 include a heat-resistant glass container, a resin container, and a metal container.

The heating furnace 30 is not particularly limited as long as it can heat the contents, and a known electric furnace or the like can be used.

Examples of the cooling unit 32 include a cooling trap.

Examples of the gas collection unit 34 include a glass container capable of collecting a gas by water displacement.

In the step (I), a polymeric organic compound, at least one transition metal compound (for example, copper oxide or copper hydroxide, or nickel oxide or nickel hydroxide), and an oxide or hydroxide of at least one element selected from alkali metals, alkaline earth metals, aluminum, and lanthanoids are mixed to give a mixture. The method of mixing the polymeric organic compound, the transition metal compound, and the oxide or hydroxide of the element is not particularly limited, and these compounds may be placed in one container and mixed for an arbitrary time by an arbitrary method.

The step (I) preferably includes a grinding operation of further grinding the obtained mixture. When the mixture is ground, the reaction efficiency in the step (II) is further increased.

Examples of the grinding method in the grinding operation include a grinding method using a known grinding apparatus. Examples of the known grinding apparatus include a rotor mill, a ball mill, and an automatic mortar.

The particle size of the ground product after grinding is, for example, preferably from 1 to 100 $\mu$m, and more preferably from 5 to 50 $\mu$m. When the particle size of the ground product is equal to or greater than the above-described lower limit, the ground product is easy to handle. When the particle size of the ground product is equal to or less than the above-described upper limit, the reaction efficiency in the step (II) is further increased.

The particle size of the ground product means a median diameter, and can be measured using, for example, a laser diffraction/scattering particle size distribution analyzer.

The grinding time in the grinding operation is, for example, preferably from 15 to 60 minutes, and more preferably from 20 to 40 minutes. When the grinding time is equal to or longer than the above-described lower limit, the mixture can be sufficiently ground. When the grinding time is equal to or shorter than the above-described upper limit, the production efficiency of the transition metal nanoparticle support can be further increased.

Examples of the polymeric organic compound include polyolefins, polyvinyl alcohol, polyethylene glycol, and celluloses.

Examples of the polyolefin include polyethylene and polypropylene. Examples of the cellulose include hydroxyethyl cellulose (HEC), hydroxypropyl cellulose (HPC), hydroxypropyl methyl cellulose (HPMC), sodium carboxymethyl cellulose (Na-CMC), and methyl cellulose (MC). The polymeric organic compound is preferably a polyolefin, and more preferably polyethylene in terms of availability.

The number average molecular weight (Mn) of polyethylene is, for example, preferably from 5000 to 10000, more preferably from 6000 to 9000, and still more preferably from 6500 to 7700. When the number average molecular weight of polyethylene is within the above-mentioned numerical range, the reaction efficiency in the step (II) is further increased.

The number average molecular weight of polyethylene can be determined, for example, by gel permeation chromatography (GPC) using polystyrene as a standard substance.

The mass average molecular weight (Mw) of polyethylene is, for example, preferably from 10000 to 50000, more preferably from 20000 to 40000, and still more preferably from 30000 to 35000. When the mass average molecular weight of polyethylene is within the above-mentioned numerical range, the reaction efficiency in the step (II) is further increased.

The mass average molecular weight of polyethylene can be determined by the same method as that for the number average molecular weight of polyethylene.

When an oxide of a transition metal and a hydroxide of a transition metal used as materials are compared with each other, a hydroxide of a transition metal is preferable because the dispersibility of the produced transition metal nanoparticles on the surface of the carrier can be further increased.

When copper oxide and copper hydroxide used as materials are compared with each other, copper hydroxide is preferable because the dispersibility of the produced copper nanoparticles on the surface of the carrier can be further increased. The copper oxide may be either of copper(I) oxide ($Cu_2O$) and copper(II) oxide (CuO).

When nickel oxide and nickel hydroxide used as materials are compared with each other, nickel hydroxide is preferable because the dispersibility of the formed nickel nanoparticles on the surface of the carrier can be further increased. The nickel oxide may be any of nickel(II) oxide (NiO), nickel(III) oxide ($Ni_2O_3$), and nickel dioxide ($NiO_2$).

Examples of the oxide of at least one element selected from alkali metals, alkaline earth metals, aluminum, and lanthanoids include magnesium oxide, calcium oxide, strontium oxide, aluminum oxide, lanthanum oxide, and cerium oxide. Among these oxides, magnesium oxide, calcium oxide, strontium oxide, aluminum oxide, and lanthanum hydroxide are preferable, and magnesium oxide, calcium oxide, and aluminum oxide are more preferable, because a chemically stable transition metal nanoparticle support can be obtained.

Examples of the hydroxide of at least one element selected from alkali metals, alkaline earth metals, aluminum, and lanthanoids include lithium hydroxide, potassium hydroxide, sodium hydroxide, magnesium hydroxide, calcium hydroxide, strontium hydroxide, aluminum hydroxide, lanthanum hydroxide, and cerium hydroxide. Among these hydroxides, magnesium hydroxide, calcium hydroxide, strontium hydroxide, aluminum hydroxide, and lanthanum hydroxide are preferable, magnesium hydroxide and calcium hydroxide are more preferable, and calcium hydroxide is still more preferable, because a chemically stable nickel nanoparticle support can be obtained.

The mixing ratio among the polymeric organic compound, the at least one transition metal compound, and the hydroxide of at least one element selected from alkali metals, alkaline earth metals, aluminum, and lanthanoids can be defined as follows in terms of molar ratio.

The theoretical amount of carbon in the polymeric organic compound is defined as C, the number of moles of the transition metal compound is defined as T (Ni when nickel is used), and the number of moles of the hydroxide of at least one element selected from alkali metals, alkaline earth metals, aluminum, and lanthanoids is defined as M. The theoretical amount of carbon in the polymeric organic compound is determined from the number of moles of carbon atoms contained in 1 mol of the polymeric organic compound.

The ratio C:T:M is preferably from (3:1:3) to (9:1:9), more preferably from (4:1:4) to (8:1:8), and still more preferably from (5:1:5) to (7:1:7). When the compounds are mixed so that the ratio C:T:M is within the above-mentioned numerical range, a nickel nanoparticle support in which nickel nanoparticles are well dispersed can be obtained.

The above-mentioned range is specifically as follows. The ratio C:T is preferably from (3:1) to (9:1), more preferably from (4:1) to (8:1), and still more preferably from (5:1) to (7:1). The ratio T:M is preferably from (1:3) to (1:9), more preferably from (1:4) to (1:8), and still more preferably from (1:5) to (1:7). Here, the significant digits of the numerical values in the ratios are represented in single-digit numbers, and are values rounded off to the closest whole number.

The theoretical amount of carbon in the polymeric organic compound is determined from the number of carbon atoms contained in 1 mol of the polymeric organic compound. Specifically, for example, the number of moles of the number of carbon atoms contained in 1 mol of polyethylene is the number of moles of the number of carbon atoms contained in 1 mol of the repeating unit of polyethylene ($-CH_2-CH_2-$) (i.e., 2 mol). The theoretical amount of carbon in polyethylene is the molar mass of carbon contained in the repeating unit of polyethylene (i.e., 24 g/mol). In general, the theoretical amount of carbon (g/mol) in the polymeric organic compound is the molar mass of the number of carbon atoms contained in 1 mol of the repeating unit of the polymeric organic compound.

The mixture or the ground product obtained in the step (I) is placed inside the reactor 24 of the production apparatus 100. Then, the heating furnace 30 is operated to heat the inside of the reactor 24.

The temperature inside the reactor 24 during heating (that is, the heating temperature) is, for example, preferably from 500 to 650°C, and more preferably from 550 to 600°C. When the heating temperature is equal to or higher than the above-described lower limit, the reaction efficiency in the step (II) is further increased. When the heating temperature is equal to or lower than the above-described upper limit, energy consumption can be further reduced.

The heating time is, for example, preferably from 30 to 120 minutes, more preferably from 40 to 100 minutes, and still more preferably from 50 to 80 minutes. When the heating time is equal to or longer than the above-described lower limit, the reaction in the step (II) proceeds more reliably. When the heating time is equal to or shorter than the above-described upper limit, the production efficiency of the transition metal nanoparticle support can be further increased.

At the time of heating the inside of the reactor 24, an inert gas such as argon (Ar) is supplied from the gas supply unit 10 into the reactor 24. The flow rate of the inert gas can be read from the flowmeter 14, and can be adjusted by the on-off valve 12. Supply of the inert gas into the reactor 24 can inhibit mixing of impurities such as oxygen into the reactor 24.

The flow rate of the inert gas is, for example, preferably from 1 to 10 mL/min, more preferably from 2 to 8 mL/min, and still more preferably from 4 to 6 mL/min. When the flow rate of the inert gas is equal to or greater than the above-described lower limit, it is possible to inhibit mixing of impurities into the reactor 24 more reliably. When the flow rate of the inert gas is equal to or less than the above-described upper limit, the reaction efficiency in the step (II) is further increased.

At the time of heating the inside of the reactor 24, water is preferably supplied from the water supply unit 20 into the reactor 24 (for example, water is preferably added dropwise to the mixture inside the reactor 24). When water is supplied into the reactor 24, the water supplied into the reactor 24 (that is, water vapor) is reformed into hydrogen by the catalytic action of the transition metal, and hydrogen gas is obtained.

When polyethylene is used as the polymeric organic compound, a reaction considered to be a main reaction in which hydrogen is generated is steam reforming (Formula (1)). When a dehydrogenation reaction proceeds, hydrogen gas is directly generated from polyethylene itself, whereas when steam reforming proceeds, there is a possibility that hydrogen gas is generated by a reaction between polyethylene and water. In addition, it is known that steam reforming is accompanied by a water gas shift reaction (Formula (2)) and a methanation reaction (Formula (3)), and CO generated by the steam reforming is converted into $CO_2$ with the generation of additional hydrogen gas by the water gas shift reaction. In addition, part of CO is methanated by consuming hydrogen gas.

[Chem. 1]

$$C_nH_{2n} + nH_2O \rightarrow nCO + 2nH_2 \qquad (1)$$

$$nC0 + nH_2O \rightleftarrows nCO_2 + nH_2 \qquad (2)$$

$$nC0 + 3nH_2 \rightleftarrows nCH_4 + nH_2O \qquad (3)$$

In the hydrogen generation by the above-mentioned reaction, the amount of hydrogen gas generated is theoretically maximized when CO generated by the steam reforming entirely proceeds to the water gas shift reaction. In this case, the amount of hydrogen gas generated is three times the amount of hydrogen contained in the raw material polyethylene.

The yield of the generated hydrogen gas can be calculated from Formula (4) on the assumption that the steam reforming (Formula (1)) and the water gas shift reaction (Formula (2)) proceed. The yield of the generated hydrogen gas is calculated from the ratio of the amount of hydrogen gas actually generated to the theoretical value calculated on the assumption that all hydrogen atoms contained in polyethylene are converted into hydrogen gas by the steam reforming and the water gas shift reaction.

[Math. 1]

$$Yield\ [\%] \quad = \quad \frac{\dfrac{H_2\left[\%\frac{V}{V}\right] \times 1\ atm \times V\ [L]}{R \times T\ [K]}}{\dfrac{PE\ amount\ [g]}{M\ [\frac{g}{mol}]} \times 3} \times 100 \qquad (4)$$

In Formula (4), V represents the gas volume after heating and flowing of Ar, R represents the gas constant and is 0.082, T represents the room temperature at the time of gas collection, and M is 28 [g/mol] that corresponds to one repeating unit ($-CH_2-CH_2-$).

The flow rate at which water is supplied into the reactor 24 can be adjusted by the water amount adjusting device 22.

The flow rate of water supplied into the reactor 24 is, for example, preferably from 0.1 to 1.0 mL/min, more preferably from 0.2 to 0.8 mL/min, and still more preferably from 0.3 to 0.5 mL/min. When the flow rate of water supplied into the reactor 24 is equal to or greater than the above-described lower limit, the amount of hydrogen gas to be obtained can be increased. When the flow rate of water supplied into the reactor 24 is equal to or less than the above-described upper limit, a decrease in the temperature inside the reactor 24 can be inhibited.

The water supplied into the reactor 24 may be pure water or tap water, but pure water is preferable from the viewpoint of inhibiting mixing of impurities into the reactor 24. Examples of the pure water include distilled water and ion-exchanged water. The above-mentioned flow rate of water is a flow rate per 2 g of the mixture introduced into the reactor 24, and is preferably adjusted in proportion to the amount of the mixture.

The gas generated inside the reactor 24 is cooled in the cooling unit 32. The gas cooled in the cooling unit 32 is collected as a generated gas G in the gas collection unit 34.

The mixture or the ground product obtained in the step (I) is heated at the above-mentioned temperature for a predetermined time to give a solid residue S (step (II)).

Heating by the heating furnace 30 is stopped, and after the reactor 24 is cooled for a predetermined time, the solid residue S is taken out from the inside of the reactor 24. When the solid residue S is taken out from the inside of the reactor 24, a transition metal nanoparticle support in which transition metal nanoparticles are supported is obtained (step (III)).

As described above, in the method for producing a transition metal nanoparticle support of the present embodiment, since the reaction is performed not in a liquid phase but in a solid phase, no waste liquid is generated unlike in the known method for producing transition metal nanoparticles. Therefore, treatment of the waste liquid is unnecessary.

In addition, in the method for producing a transition metal nanoparticle support of the present embodiment, it is not necessary to subject the surface of the transition metal nanoparticles to treatment such as oxidation prevention, and a transition metal nanoparticle support having catalytic activity can be obtained merely by performing heat treatment.

Therefore, the transition metal nanoparticles can be produced more easily.

Examples

Hereinafter, the present invention is described more specifically with reference to examples, but the present invention is not limited to these examples.

Example 1

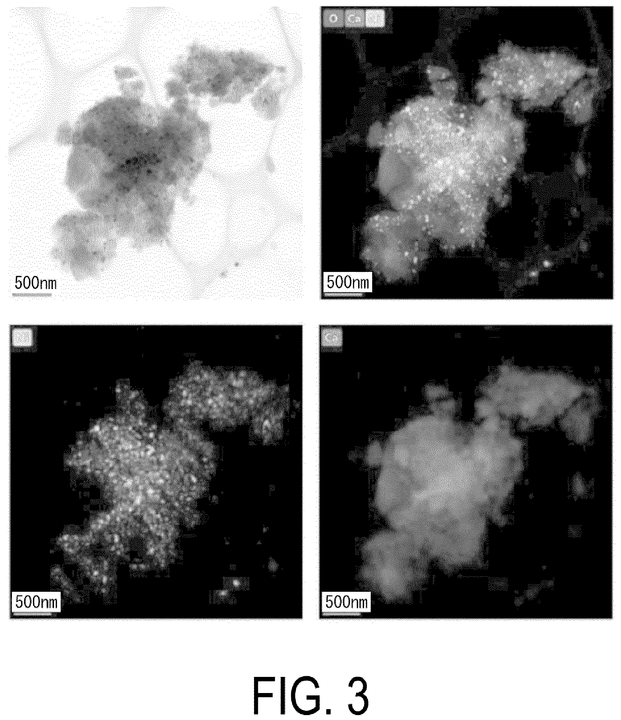

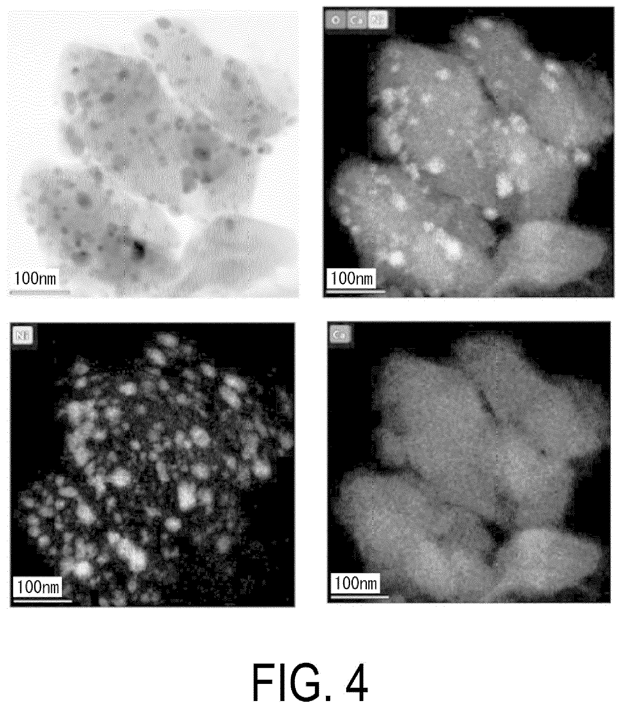

As a polymeric organic compound, a polyethylene powder having a number average molecular weight of 7700 and a mass average molecular weight of 35000 was prepared. As a transition metal compound, nickel hydroxide was prepared. As a hydroxide or oxide of at least one element selected from alkali metals, alkaline earth metals, aluminum, and lanthanoids, calcium hydroxide was prepared. Polyethylene, nickel hydroxide, and calcium hydroxide were mixed at a molar ratio of 6:1:6 (the molar ratio of polyethylene is the number of moles of the theoretical amount of carbon in polyethylene). The mixture was ground for 30 minutes using a planetary ball mill to give a ground product having an average particle size of 10 $\mu$m (step (I)). In a glass reactor (volume: 235 mL), 2 g of the ground product was placed, and the reactor was heated to 600°C with an electric furnace capable of heating the reactor (step (II)). While the reactor was heated, argon gas was supplied from a gas cylinder into the reactor at a rate of 5 mL/min. While the reactor was heated, distilled water was added dropwise from a water tank to the ground product in the reactor at a rate of 0.3 mL/min. After 60 minutes from the dropwise addition of distilled water, heating of the electric furnace was stopped, followed by air cooling. A gas generated from the reactor was cooled in a cooling trap and then collected in a glass cylinder by water displacement. The gas collected in the cylinder was analyzed for composition by a gas chromatograph/thermal conductivity detector (GC-TCD). A solid residue was collected from the cooled reactor (step (III)). The resulting solid residue was analyzed by powder X-ray diffraction (XRD). In addition, the obtained solid residue was extracted with chloroform ($CHCl_3$), and subjected to structural analysis by $^1$HNMR (proton nuclear magnetic resonance). As a result of XRD and $^1$HNMR, it was found that the obtained solid residue was a support in which nickel (Ni) nanoparticles were supported on calcium carbonate ($CaCO_3$). The composition of the gas analyzed by a GC-TCD is presented in FIG. 2 (Entry 1). Images obtained by observing the obtained solid residue with a transmission electron microscope (TEM) are given in FIGS. 3 and 4.

As presented in FIG. 2, it was found that the gas generated in Example 1 contained 33.2 vol% of hydrogen. The yield of hydrogen was 54.4% relative to the theoretical maximum value, and was a high yield of 50% or more.

As illustrated in FIGS. 3 and 4, the support obtained in Example 1 was a support in which nickel nanoparticles (nanoparticles of metal nickel) were supported. The particle size of the nickel nanoparticles was from 5 to 50 nm, and it was found that the nickel nanoparticles were dispersed and supported on the entire carrier. In FIG. 3, the upper left image is a bright field photograph, the upper right image is a photograph in which the entire support is caused to emit fluorescence, the lower left image is a photograph in which nickel nanoparticles are caused to emit fluorescence, and the lower right image is a photograph in which the carrier is caused to emit fluorescence. FIG. 4 is photographs in which a part of FIG. 3 is enlarged. In FIG. 4, the upper left image is a bright field photograph, the upper right image is a photograph in which the entire support is caused to emit fluorescence, the lower left image is a photograph in which nickel nanoparticles are caused to emit fluorescence, and the lower right image is a photograph in which the carrier is caused to emit fluorescence.

In the bright field photographs of FIGS. 3 and 4, the dark black portions indicate the presence of nickel nanoparticles, and the light black portions indicate the presence of the carrier. In the upper right photographs of FIGS. 3 and 4, the presence of oxygen, calcium, and nickel is indicated by shading (actually by color coding). The lower left photographs of FIGS. 3 and 4 brightly indicate the presence of nickel. The lower right photographs of FIGS. 3 and 4 brightly indicate the presence of calcium.

Example 2

A gas was generated and a solid residue was obtained in the same manner as in Example 1 except that nickel(II) oxide was used as the transition metal compound. As a result of XRD and $^1$HNMR, it was found that the obtained solid residue was a support in which nickel nanoparticles were supported on calcium carbonate. The composition of the generated gas analyzed by a GC-TCD is presented in FIG. 2 (Entry 2).

As presented in FIG. 2, it was found that the gas generated in Example 2 contained 20.4 vol% of hydrogen. The yield of hydrogen was 20.4% relative to the theoretical maximum value, and was 20% or more.

Comparative Example 1

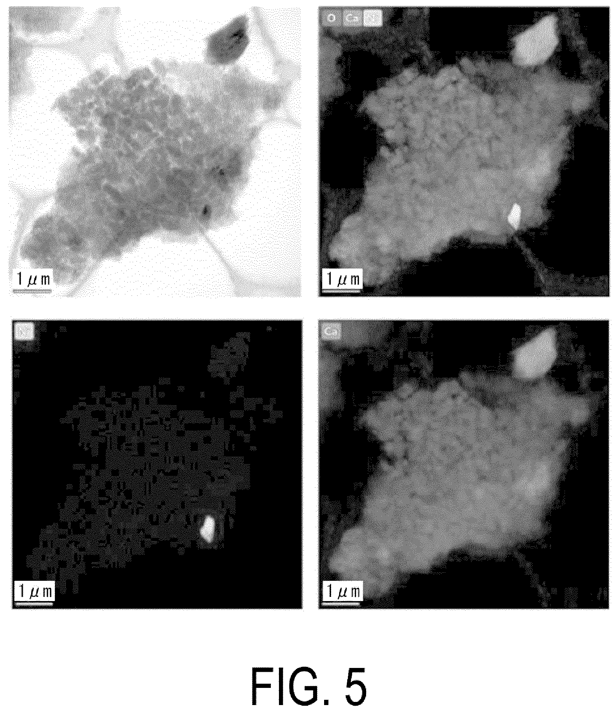

A gas was generated and a solid residue was obtained in the same manner as in Example 1 except that metal nickel was used instead of nickel oxide or nickel hydroxide. As a result of XRD and $^1$HNMR, it was found that the obtained solid residue was a support in which nickel particles were supported on calcium carbonate. The composition of the generated gas analyzed by a GC-TCD is presented in FIG. 2 (Entry 3). Images obtained by observing the obtained solid residue with a transmission electron microscope (TEM) are given in FIG. 5.

As illustrated in the lower left photograph of FIG. 5, in the support obtained in Comparative Example 1, one nickel particle having a particle size of several hundred nanometers was supported. This is considered to be because the nickel nanoparticles were aggregated to increase the particle size. In FIG. 5, the upper left image is a bright field photograph, the upper right image is a photograph in which the entire support is caused to emit fluorescence, the lower left image is a photograph in which nickel nanoparticles are caused to emit fluorescence, and the lower right image is a photograph in which the carrier is caused to emit fluorescence.

In addition, as presented in FIG. 2, it was found that the gas generated in Comparative Example 1 contained only 1.0 vol% of hydrogen, and that the metal nickel hardly exhibited catalytic activity in the steam reforming reaction.

Example 3

Polyethylene, nickel hydroxide, and calcium hydroxide were mixed in the same manner as in Example 1 using a planetary ball mill at a rotational speed of 700 rpm for 30 minutes to give a ground product containing polyethylene (theoretical amount of carbon), nickel hydroxide, and calcium hydroxide at a molar ratio of 6:1:6 (step I). Subsequently, steps II and III were also performed in the same manner as in Example 1 to give a Ni nanoparticle support, and the analysis was performed. As a result, the generated gas contained 48.3 vol% of hydrogen, and the hydrogen yield was 53.4% of the theoretical maximum value.

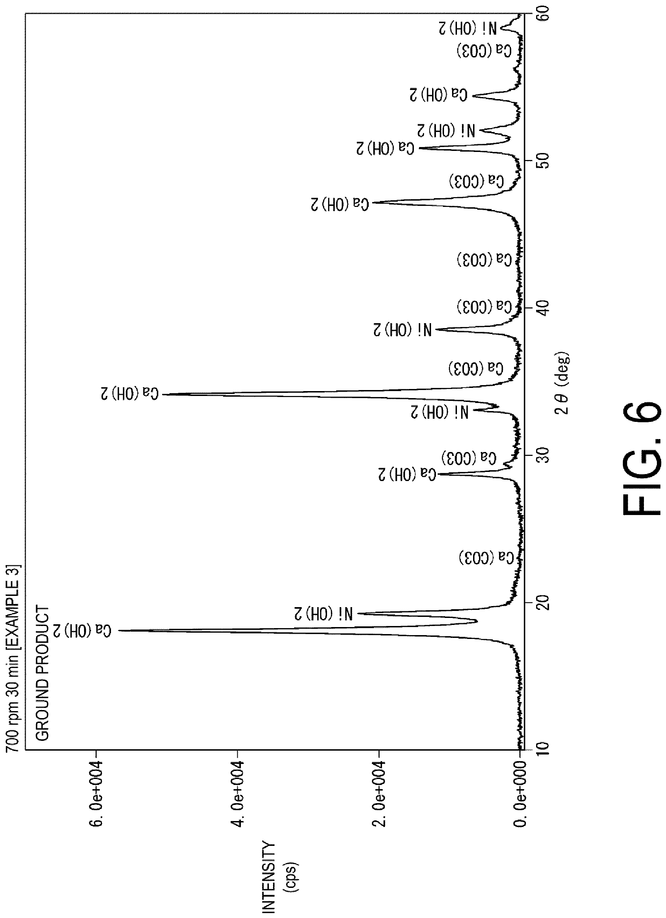

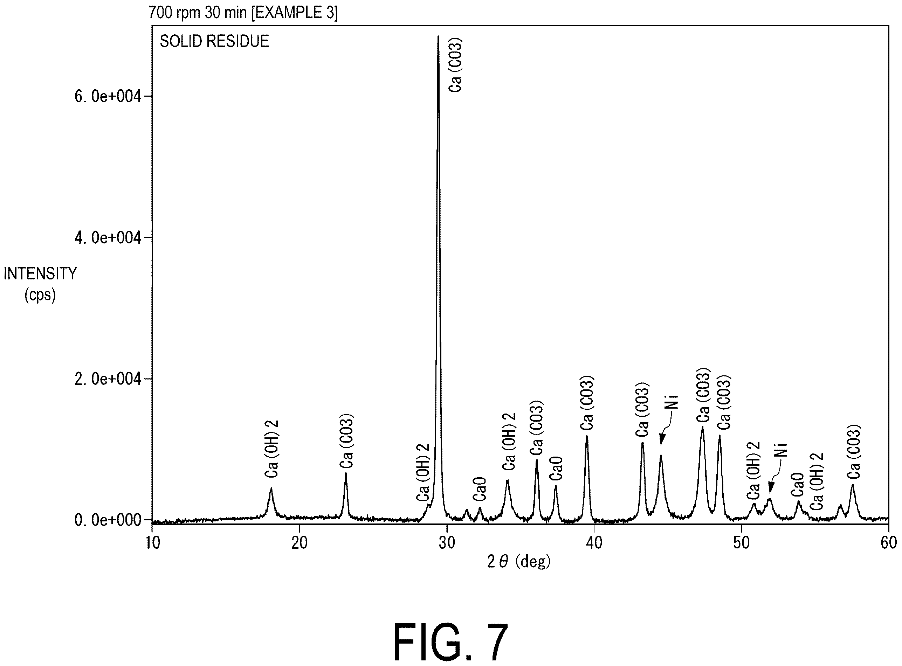

When X-ray diffraction spectra were measured for the ground product obtained in step I and the solid residue obtained in step III, a peak derived from metal nickel was not observed in the ground product (FIG. 6), and was observed only in the solid residue (FIG. 7). This result indicates that at least a part of the Ni nanoparticles contained in the solid residue (Ni nanoparticle support) obtained in step III are metal nickel nanoparticles.

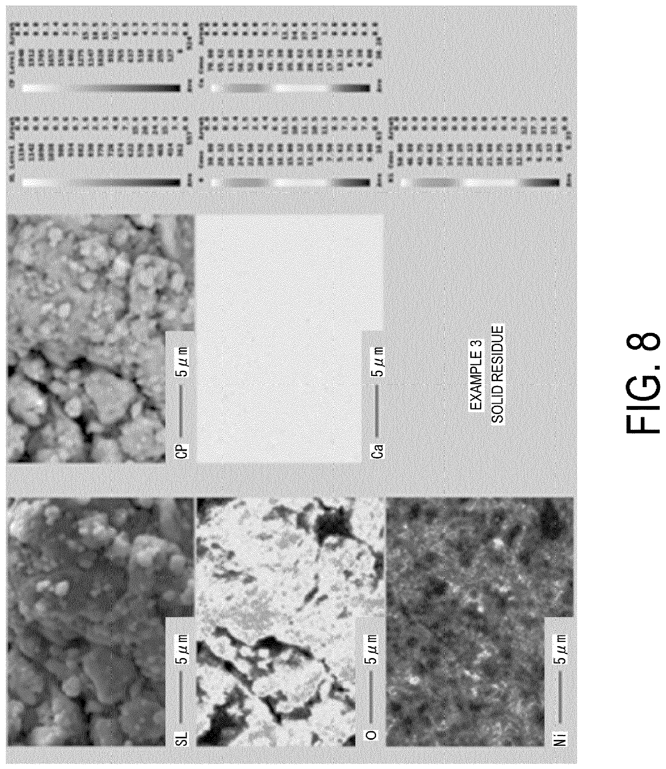

The results of elemental mapping of the solid residue obtained in step III by an EPMA (electron probe microanalyzer) are illustrated in FIG. 8. The upper left and right photographs are bright field photographs taken with a SEM, the middle-left photograph indicates the presence of oxygen by shading (actually by color coding), the middle right photograph indicates the presence of calcium by shading, and the lower left photograph indicates the presence of Ni by shading. From these photographs, it was found that the Ni nanoparticles were substantially uniformly dispersed over the entire surface of the calcium oxide carrier.

Example 4

A ground product containing polyethylene (theoretical amount of carbon), nickel hydroxide, and calcium hydroxide at a molar ratio of 6:1:6 was obtained in the same manner as in Example 1 except that the components were mixed manually using a pestle and a mortar without using a planetary ball mill (step I). Subsequently, steps II and III were also performed in the same manner as in Example 1 to give a Ni nanoparticle support, and the analysis was performed. As a result, the generated gas contained 39.7 vol% of hydrogen, and the hydrogen yield was 37.5% of the theoretical maximum value. X-ray diffraction analysis was performed in the same manner as in Example 3, and the same conclusion as in Example 3 was obtained.

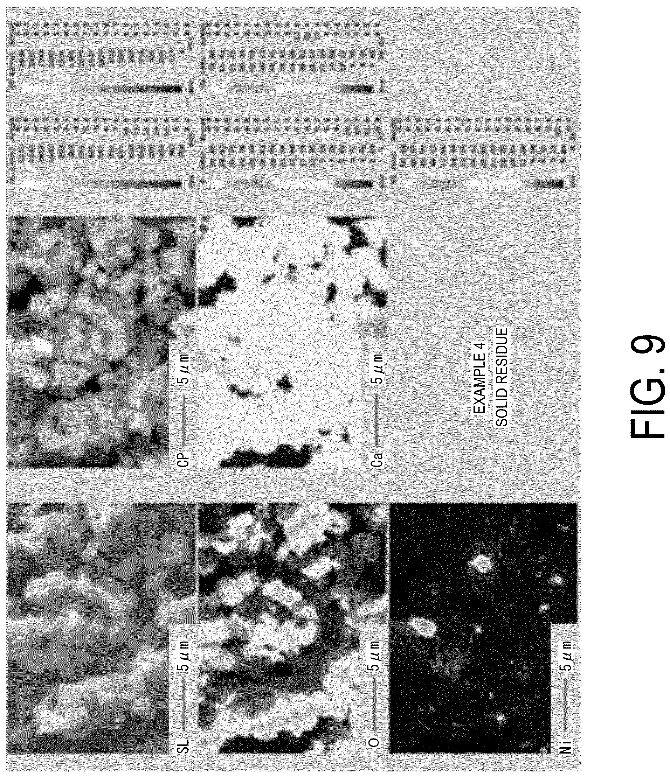

The results of elemental mapping of the solid residue obtained in step III by an EPMA are illustrated in FIG. 9. The arrangement of the photographs is the same as in FIG. 8. From these photographs, it was found that Ni nanoparticles were locally present in a small number of places on the surface of the calcium oxide carrier in a concentrated manner.

Example 5

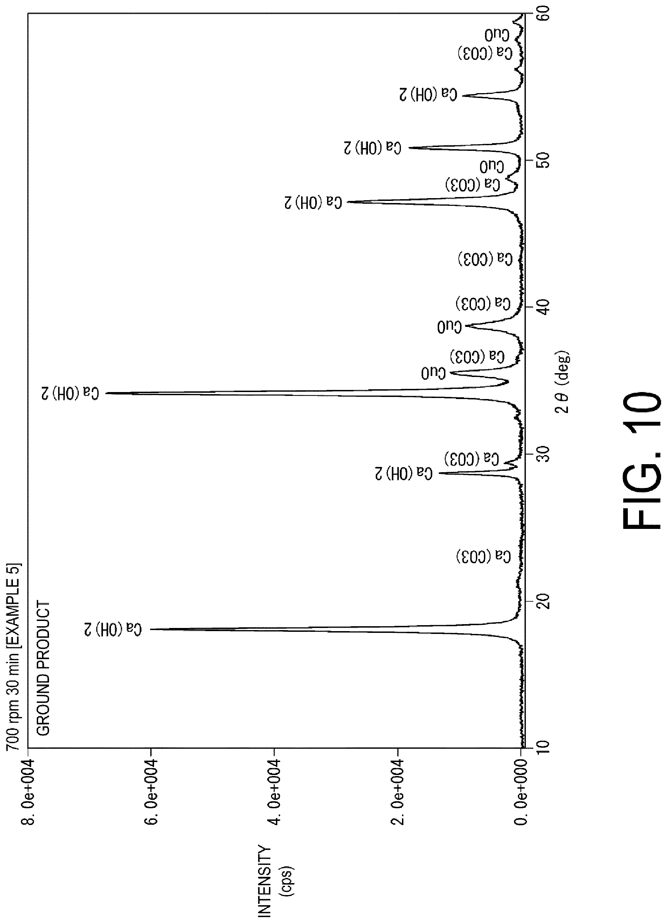

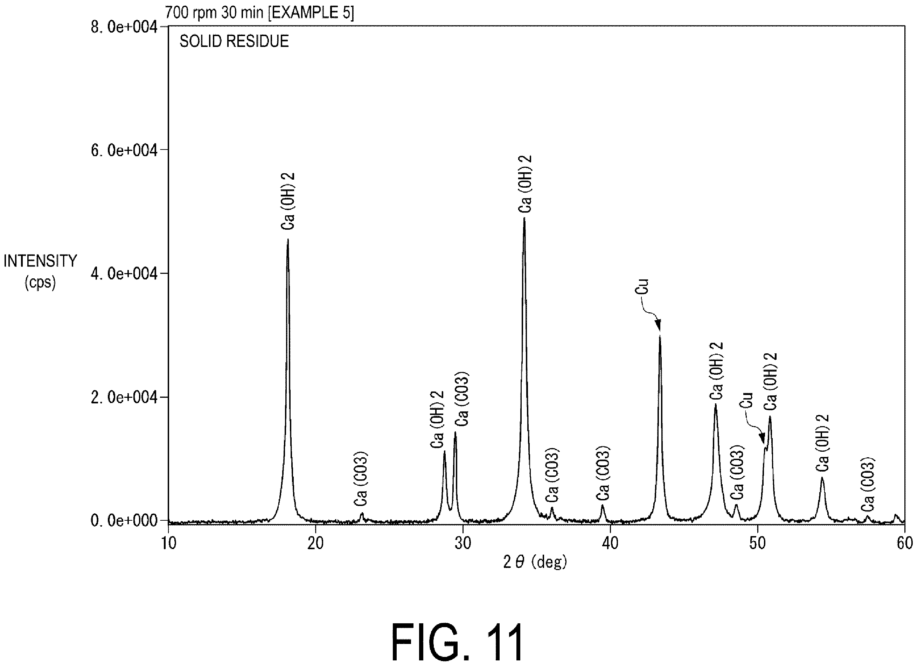

Mixing was conducted in the same manner as in Example 1 using a planetary ball mill at a rotational speed of 700 rpm for 30 minutes to give a ground product containing polyethylene (theoretical amount of carbon), copper oxide, and calcium hydroxide at a molar ratio of 5.8:1.2:5.8 (step I). Subsequently, steps II and III were also performed in the same manner as in Example 1 to give a Cu nanoparticle support, and the analysis was performed. As a result, the generated gas contained 7.6 vol% of hydrogen. When X-ray diffraction spectra were measured for the ground product obtained in step I and the solid residue obtained in step III, a peak derived from metal copper was not observed in the ground product (FIG. 10), and was observed only in the solid residue (FIG. 11). This result indicates that at least a part of the Cu nanoparticles contained in the solid residue (Cu nanoparticle support) obtained in step III are metal copper nanoparticles.

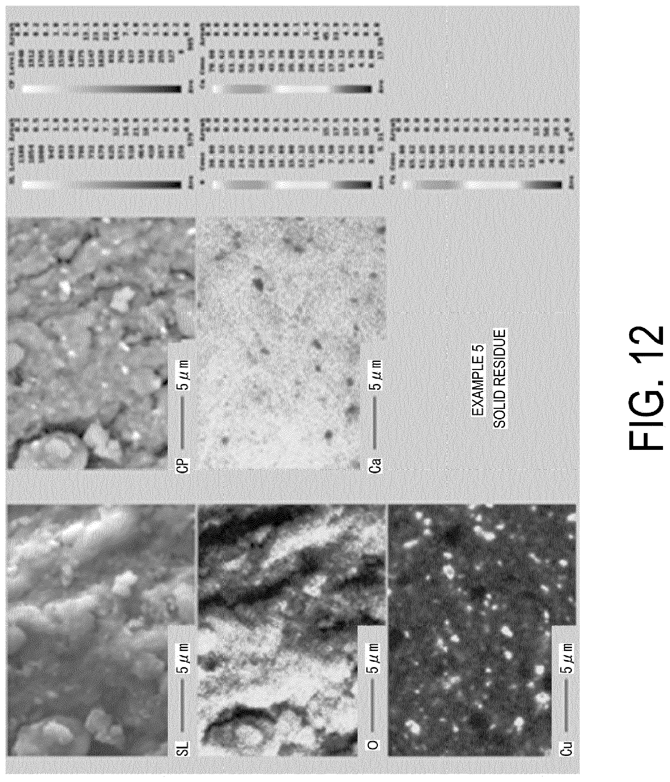

The results of elemental mapping of the solid residue obtained in step III by an EPMA are illustrated in FIG. 12. The upper left and right photographs are bright field photographs taken with a SEM, the middle-left photograph indicates the presence of oxygen by shading (actually by color coding), the middle right photograph indicates the presence of calcium by shading, and the lower left photograph indicates the presence of Cu by shading. From these photographs, it was found that the Cu nanoparticles were widely dispersed over the entire surface of the calcium oxide carrier.

Example 6

A ground product containing polyethylene (theoretical amount of carbon), copper oxide, and calcium hydroxide at a molar ratio of 5.8:1.2:5.8 was obtained in the same manner as in Example 5 except that the components were mixed manually using a pestle and a mortar without using a planetary ball mill (step I). Subsequently, steps II and III were also performed in the same manner as in Example 5 to give a Cu nanoparticle support, and the analysis was performed. As a result, the generated gas contained 1.9 vol% of hydrogen. X-ray diffraction analysis was performed in the same manner as in Example 5, and the same conclusion as in Example 5 was obtained.

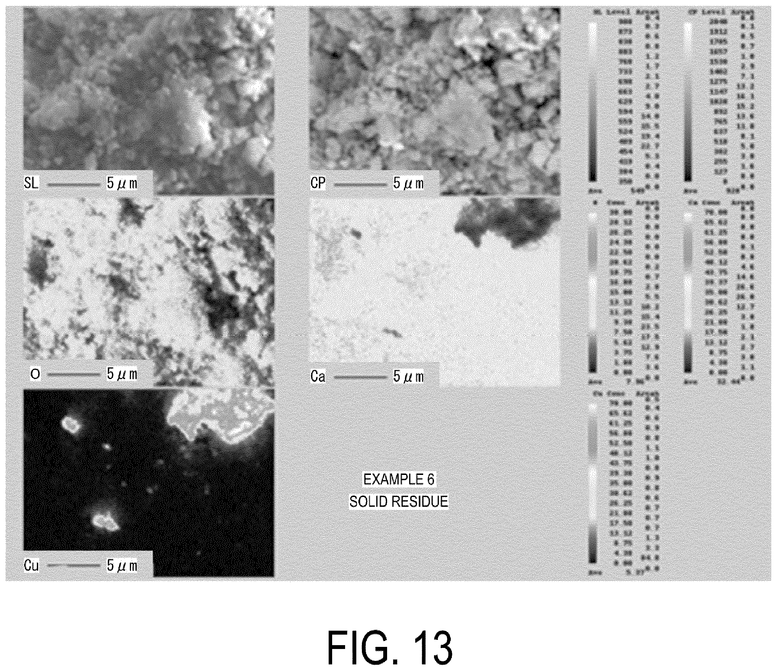

The results of elemental mapping of the solid residue obtained in step III by an EPMA are illustrated in FIG. 13. The arrangement of the photographs is the same as in FIG. 12. From these photographs, it was found that Cu nanoparticles were locally present in a small number of places on the surface of the calcium oxide carrier in a concentrated manner.

Example 7

Polyethylene, copper hydroxide, and calcium hydroxide were mixed in the same manner as in Example 1 using a planetary ball mill at a rotational speed of 700 rpm for 30 minutes to give a ground product containing polyethylene (theoretical amount of carbon), copper hydroxide, and calcium hydroxide at a molar ratio of 6:1:6 (step I). Subsequently, steps II and III were also performed in the same manner as in Example 1 to give a Cu nanoparticle support, and the analysis was performed. As a result, the generated gas contained 7.3 vol% of hydrogen. When X-ray diffraction spectra were measured for the ground product obtained in step I and the solid residue obtained in step III, a peak derived from metal copper was not observed in the ground product (not illustrated), and was observed only in the solid residue (not illustrated). This result indicates that at least a part of the Cu nanoparticles contained in the solid residue (Cu nanoparticle support) obtained in step III are metal copper nanoparticles.

Elemental mapping of the solid residue obtained in step III was performed by an EPMA (not illustrated), and it was found that Cu nanoparticles were dispersed over the entire surface of the calcium oxide carrier.

Example 8

A ground product containing polyethylene (theoretical amount of carbon), copper hydroxide, and calcium hydroxide at a molar ratio of 6:1:6 was obtained in the same manner as in Example 7 except that the components were mixed manually using a pestle and a mortar without using a planetary ball mill (step I). Subsequently, steps II and III were also performed in the same manner as in Example 7 to give a Cu nanoparticle support, and the analysis was performed. As a result, the generated gas contained 1.9 vol% of hydrogen. X-ray diffraction analysis was performed in the same manner as in Example 7, and the same conclusion as in Example 7 was obtained.

Elemental mapping of the solid residue obtained in step III was performed by an EPMA (not illustrated), and it was found that Cu nanoparticles were locally present in a small number of places on the surface of the calcium oxide carrier in a concentrated manner.

The transition metal nanoparticle support of the present invention can be used not only as a catalyst for hydrogenation reactions but also as a catalyst for various chemical reactions, a catalyst for fuel cells, an electrode material, and the like, and can be applied to various fields. The transition metal nanoparticle support of the present invention, when being used as a catalyst, can be repeatedly used twice or more.

Reference Signs List

10: Gas supply unit, 12: On-off valve, 14: Flowmeter, 20: Water supply unit, 22: Water amount adjusting device, 24: Reactor, 30: Heating furnace, 32: Cooling unit, 34: Gas collection unit, 100: Production apparatus, G: Generated gas, S: Solid residue

**Claims**

1. A method for producing a transition metal nanoparticle support, the method comprising the steps of:

    (I) obtaining a mixture by mixing: a polymeric organic compound; an oxide of at least one transition metal or a hydroxide of at least one transition metal; and an oxide or hydroxide of at least one element selected from alkali metals, alkaline earth metals, aluminum, and lanthanoids;
    (II) obtaining a solid residue by heating the mixture; and
    (III) obtaining, from the solid residue, a support in which nanoparticles of the at least one transition metal are supported.

2. The method for producing a transition metal nanoparticle support according to claim 1, wherein the element is at least one selected from alkali metals and alkaline earth metals.

3. The method for producing a transition metal nanoparticle support according to claim 1, wherein the polymeric organic compound is at least one selected from polyolefins, polyvinyl alcohol, polyethylene glycol, and celluloses.

4. The method for producing a transition metal nanoparticle support according to claim 1, wherein the step (I) comprises a grinding operation of grinding the mixture.

5. The method for producing a transition metal nanoparticle support according to claim 1, wherein a heating temperature in the step (II) is from 500 to 650°C.

6. The method for producing a transition metal nanoparticle support according to claim 1, wherein in the step (II), water is added dropwise to the mixture.

7. The method for producing a transition metal nanoparticle support according to claim 1, wherein the transition metal is copper or nickel.

8. A transition metal nanoparticle support comprising:

    a carrier containing at least one element selected from alkali metals, alkaline earth metals, aluminum, and lanthanoids; and
    nanoparticles of at least one transition metal that are supported on the carrier.

# FIG. 1

| Entry | | GAS COMPOSITION [% v/v] | | | | YIELD [%] |
|---|---|---|---|---|---|---|
| | | $H_2$ | $CH_4$ | CO | $CO_2$ | |
| 1 | PE + Ni(OH)$_2$ + Ca(OH)$_2$ | 33.2 | 2.2 | 0 | 0.3 | **54.4** |
| 2 | PE + NiO + Ca(OH)$_2$ | 20.4 | 0.5 | 0.4 | 0.4 | **20.4** |
| 3 | PE + Ni + Ca(OH)$_2$ | 1.0 | 0.4 | 0 | 0 | **0.9** |

# FIG. 2

FIG. 3

# FIG. 4

FIG. 5

FIG. 6

EP 4 501 454 A1

FIG. 7

EP 4 501 454 A1

EXAMPLE 3
SOLID RESIDUE

FIG. 8

SL ——— 5μm

CP ——— 5μm

O ——— 5μm

Ca ——— 5μm

Ni ——— 5μm

EXAMPLE 4
SOLID RESIDUE

FIG. 9

FIG. 10

FIG. 11

EXAMPLE 5
SOLID RESIDUE

FIG. 12

FIG. 13

## INTERNATIONAL SEARCH REPORT

| International application No. |
| --- |
| **PCT/JP2023/012385** |

**A. CLASSIFICATION OF SUBJECT MATTER**

**B01J 37/08**(2006.01)i; **B01J 27/232**(2006.01)i; **B01J 35/02**(2006.01)i; **B01J 37/04**(2006.01)i; **B01J 37/16**(2006.01)i; **B22F 9/20**(2006.01)i

FI: B01J37/08; B01J27/232 M; B01J35/02 H ZNM; B01J37/04 101; B01J37/16; B22F9/20 F

According to International Patent Classification (IPC) or to both national classification and IPC

**B. FIELDS SEARCHED**

Minimum documentation searched (classification system followed by classification symbols)

B01J37/08; B01J27/232; B01J35/02; B01J37/04; B01J37/16; B22F9/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-001928 A (TOHOKU UNIVERSITY) 10 January 2019 (2019-01-10) claims 1-5, paragraphs [0013], [0021]-[0021], fig. 2 | 1-8 |
| X | CN 105664948 A (JIANGSU UNIVERSITY) 15 June 2016 (2016-06-15) claims 1-10, paragraphs [0005]-[0017], fig. 2 | 8 |
| A | | 1-7 |
| A | JP 2004-115688 A (JFE PLANT & SERVICE CORPORATION) 15 April 2004 (2004-04-15) entire text, all drawings | 1-8 |

☐ Further documents are listed in the continuation of Box C. ☑ See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| **16 June 2023** | **27 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/012385**

| Patent document cited in search report | | | Publication date (day/month/year) | Patent family member(s) | Publication date (day/month/year) |
|---|---|---|---|---|---|
| JP | 2019-001928 | A | 10 January 2019 | (Family: none) | |
| CN | 105664948 | A | 15 June 2016 | (Family: none) | |
| JP | 2004-115688 | A | 15 April 2004 | (Family: none) | |

Form PCT/ISA/210 (patent family annex) (January 2015)

**REFERENCES CITED IN THE DESCRIPTION**

**Patent documents cited in the description**

- JP 2022054850 A
- JP 2010037647 A